# EUROPÄISCHE PATENTSCHRIFT

(11) **EP 0 492 220 B1**
(45) Veröffentlichungstag und Bekanntmachung des Hinweises auf die Patenterteilung: **28.02.1996**
(21) Anmeldenummer: 91120986.4
(22) Anmeldetag: 06.12.1991
(51) Int. Cl.: H04Q 1/14, H02B 1/20

(54) **Verteilereinheit zum Anschliessen und Verbinden von elektrischen Leitungen in Telekommunikationsanlagen**
Distributor for connecting and joining together electrical wires in telecommunication installations
Distributeur pour raccordement et connexion de fils électriques pour installations de télécommunication

(30) Priorität: 19.12.1990 DE 9017157 U
(43) Veröffentlichungstag der Anmeldung: 01.07.1992
(73) Patentinhaber: SIEMENS AKTIENGESELLSCHAFT, D-80333 München (DE)
(72) Erfinder: Knoll, Rudolf, Dipl.-Ing., W-8137 Berg 3 (DE); Störk, Peter, Ing., W-8196 Eurasburg (DE)

(56) Entgegenhaltungen:
- EP-A- 0 067 636
- DE-A- 3 727 833
- DE-U- 9 017 157
- US-A- 4 470 102
- US-A- 4 649 236

## Beschreibung

### Verteilereinheit zum Anschließen und Verbinden von elektrischen Leitungen in Telekommunikationsanlagen

Die Erfindung betrifft eine Verteilereinheit zum Anschließen und Verbinden von elektrischen Leitungen in Telekommunikationsanlagen mit einem die hierzu erforderlichen Anschlußleisten aufnehmenden länglichen Trägerteil und mindestens einem damit rückseitig verbindbaren Halteelement, das seinerseits zur Herstellung des gebrauchsfertigen Endmontagezustandes, in welchem das Trägerteil längsseitig vertikal ausgerichtet ist, dient.

Ein derartiger Verteiler dient dazu, Rangierleitungen von jedem beliebigen Anschlußpunkt der Anschlußleisten für die ankommenden Leitungen zu jedem beliebigen Anschlußpunkt der Anschlußleisten für die beispielsweise zu der Vermittlungseinrichtung führenden abgehenden Leitungen verlegen zu können. Neuzeitlich konzipierte Verteilereinheiten sind montage- und wartungsfreundlich gestaltet und es wird auch bei zunehmender Verdrahtungsdichte eine übersichtliche Verdrahtungsanordnung angestrebt. Durch eine spezielle Ausgestaltung der verwendeten Anschlußleisten ist es möglich, die Abmessungen eines Verteilers zu reduzieren. Neben den Anschlußleisten und weiteren für die Drahtführung vorhandenen Elementen sind für die unterschiedlichsten Zwecke Zusatzeinbauten grundsätzlich erforderlich. Da solche Zusatzeinbauten beispielsweise für Meßzwecke dienen bzw. bei Bedarf auch nachträglich angebracht werden müssen, ist üblicherweise für derartige Zusatzeinbauten ein zusätzlicher außerhalb des Verdrahtungsbereiches liegender Raum innerhalb der Verteilereinheit vorgesehen. Da also neben dem Raumbedarf für die zur eigentlichen Verteilerfunktion notwendigen Elemente der zusätzliche Raum für die Zusatzeinbauten, die problemlos zugänglich sein sollten, zur Verfügung gestellt werden muß, führt dies zu entsprechend vergrößerten äußeren Abmessungen der Verteilereinheit.

Es ist die Aufgabe der Erfindung, eine Verteilereinheit zu schaffen, bei der die äußeren Abmessungen lediglich durch die für die Verteilerfunktion erforderlichen Elemente bestimmt wird und bei der trotzdem das problemlose Anbringen von Zusatzeinbauten möglich ist.

Diese Aufgabe wird durch die im Patentanspruch angegebene Verteilereinheit gelöst.

Ohne Reduzierung des für die zwingend erforderlichen Bauteile, wie Anschlußleisten, Drahtführungselemente und für die Verdrahtung vorhandenen Raumes und ohne Veränderung der ausschließlich durch diese Bauteile unter Berücksichtigung einer gewünschten maximalen Anschlußzahl vorgegebenen Abmessungen einer solchen Verteilereinheit wird durch die erfindungsgemäße Lösung das Platzangebot für Zusatzeinbauten erweitert. Derartige Zusätzeinbauten sind beispielsweise Anschlußdosen, Amtsleitungsumschaltungen, bestimmte Arten von Schutzschaltern, Elemente für Sicherungseinrichtungen und für Erdanschluß. Der Zugriff zu diesen an dem schienenartigen Element befestigten Zusatzeinbauten ist jederzeit probiemlos möglich. So können beispielsweise vermittels der daran befestigten und ohne weiteres zugänglichen Anschlußdose für Prüfzwecke Messungen vorgenommen werden. Die von außen von der Bedienungsseite her unmittelbar aufgesetzte Schiene kann in eine andere Position durch einen einfachen Handgriff versetzt werden, so daß der normalerweise von ihr überdeckte Bereich des Verteilers gleichfalls ohne weiteres zugänglich ist. Außerdem liegen die Aufnahmeelemente außerhalb des die Anschlußleisten aufnehmenden Trägerteils, so daß dieses Trägerteil als Strangpreßprofil hergestellt werden kann.

Für die U-förmige Schiene, die in einfacher Weise über die Kante der überstehenden Platte gehängt ist und für die darauf an ihrer zur Bedienungsseite hinzeigenden Fläche anzubringenden Zusatzmodule und Sonderbauteile steht eine Einbautiefe zur Verfügung, die zumindest der Höhe des Trägerteils entspricht.

Das schienenartige Element wird in einfachster Weise in die eine Parkposition darstellende zweite Position dadurch versetzt, daß sie mit den an der Unterkante seiner Seitenschenkel vorhandenen Schlitze, die etwas breiter als die Dicke der Platte sind, auf diese von oben her aufgeschoben wird.

Aus der DE-A-3 727 833 ist eine Gehäuseeinheit zur Aufnahme des Hauptverteilers eines Kommunikationssystems bekannt, jedoch ist bei dieser bekannten Verteilereinheit kein die Anschlußleisten aufnehmendes längliches Trägerteil vorhanden, welches mit seinen Abmessungen die Außenmaße des Gehäuses bestimmt.

Im folgenden wird die Erfindung anhand eines in der Zeichnung dargestellten Ausführungsbeispiels näher erläutert.

Dabei zeigen
- FIG 1: eine Explosionsdarstellung einer Verteilereinheit,
- FIG 2 und FIG 3: unterschiedliche Ansichten des oberen Bereiches einer unbeschalteten Verteilereinheit, und
- FIG 4: die Draufsicht auf die Vorderseite einer Verteilereinheit.

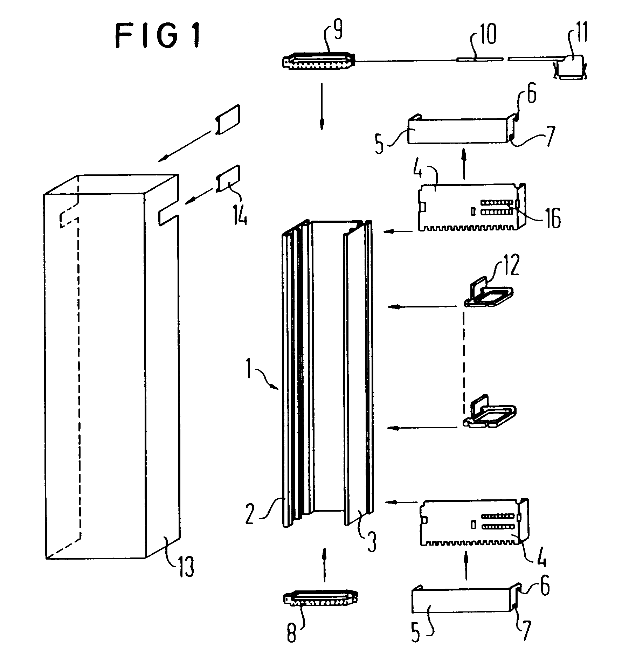

Die Grundeinheit zur Montage z. B. an einer Wand besteht gemäß FIG 1 aus dem Trägerteil 1 und der mit ihr im oberen und unteren Bereich verbindbaren Platte 4. Das Trägerteil ist U-förmig ausgebildet und als Strangpreßprofil hergestellt, wobei dann jeweils eine beliebige Längenabmessung durch einfaches Abtrennen von der "Meterware" möglich ist. Durch eine entsprechende Ausgestaltung der freien Kante eines jeden Schenkels 2 bzw. 3 dieser U-Form des Trägerteils können die Anschlußleisten 8 bzw. 9 an diesen Kanten befestigt werden. Hierzu kann beispielsweise die freie Kante des einen Schenkels eine durchgehende ggf. leicht nach innen geneigte vollzylindrische Form aufweisen. Auf diese vollzylindrische Form wird dann eine Anschlußleiste, die mit einem daran angepaßten Ausschnitt versehen ist, aufgesteckt. Der andere Schenkel weist an der freien Oberkante einen durchgehenden Schraubkanal auf. Nach dem Aufstecken der Anschlußleiste auf die als vollzylindrische Form ausgebildete Kante des anderen Schenkels ist an einer beliebigen längsseitigen Stelle des Trägerteils diese Anschlußleiste z. B. mit einem daran angesetzten Flansch auf die Kanten des Schraubkanals aufzusetzen. Mit einer selbstschneidenden Schraube kann nun die Anschlußleiste in dem Schraubkanal bei einer entsprechenden Lochung des Flansches an dem Trägerteil 1 befestigt werden. Das Trägerteil nimmt in dieser geschilderten Weise zur Bildung eines Verteilerblockes eine Mehrzahl von Anschlußleisten 8 bzw. 9 auf, die längsseitig aneinandergereiht sind. Es können beispielsweise als Anschlußleisten 9 solche verwendet werden, bei denen Anschlußelemente an den sich gegenüberliegenden Längsseiten vorgesehen sind. Danach sind z. B. die Anschlußelemente für die selten zu ändernden und zur Vermittlungseinrichtung führenden Leitungen auf der Rückseite der Leiste angeordnet. Diese als Kabel 10 abgehenden Leitungen der Internseite können bereits werkseitig angeschlossen werden. Zur Kontaktierung mit den in der Vermittlungseinrichtung vorhandenen Gegenkontakten sind sie mit einer Steckeinrichtung 11 verbunden. Die Anschlußelemente für die Externseite, also für die Teilnehmerleitungen, sind nach wie vor an der vorderen Bedienungsseite vorgesehen. Diese Anschlußelemente sind somit leicht zugänglich, so daß Änderungen in der Belegung der Leiste leicht vorgenommen werden können. Zur geordneten Führung der Leiter sind an dem einen Schenkel drei des U-förmigen Profils hügel- oder hakenförmige Drahtführungselemente 12 in einfacher Weise aufzuschnappen. Mit diesen Drahtführungselementen wird somit ein senkrechter Kanal zur Führung der Leitungen zur Verfügung gestellt.

Zur Wandbefestigung wird das Trägerteil 1 an seinem oberen und unteren Ende mit einer C-förmig ausgestalteten Platte 4 verschraubt. Diese Platte ragt sowohl in Längsrichtung als auch an einer Seite über das Trägerteil 1 hinaus. Mit einer solchen Platte kann nach der Montage ein bestimmter Abstand zwischen dem Verteilerblock und einer Wandfläche eingehalten werden. In diesem Wandabstandsbereich sind Kabel zu führen. Die in dem seitlich überstehenden Teil der Platte 4 vorhandenen Lochungen 16 dienen dazu, mittels entsprechender Schellen die seitlich durch die Drahtführungselemente 12 gehaltenen Kabel zu befestigen. Die betreffenden Leiter werden dann beispielsweise nach ihrer Umlenkung von oben in dem durch das Trägerteil 1 vorgegebenen Raum zu den Anschlußleisten geführt. Weiterhin zeigt die Darstellung der FIG 1 ein schienenartiges Element 5, im folgenden kurz als Schiene bezeichnet, das zur Befestigung von Zusatzeinbauten dient. Duch die hakenförmige Ausformung 6 bzw. durch den Schlitz 7 läßt sich diese Schiene an der Kante der oberen Platte 4 einhängen bzw. aufstecken. Eine Verteilereinheit kann nach ihrer endgültigen Bestückung mit einer Abdeckhaube 13 versehen werden. Diese Abdeckhaube 13 weist beidseitig Freinehmungen auf, die mit eingeschobenen und verrasteten Kunststoffteilen 14 abzudecken sind. Diese Freinehmungen dienen dazu, Querkanäle zu ermöglichen, wenn eine Verteilereinheit durch eine jeweils seitlich unmittelbar benachbart anzuordnende gleichartige Verteilereinheit erweitert wird.

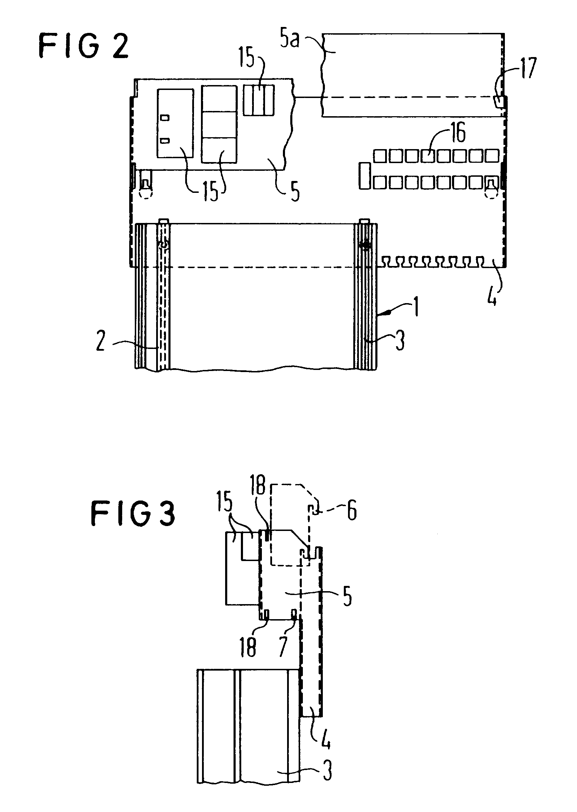

Die FIG 2 zeigt in der Draufsicht die im oberen Endbereich des Trägerteils 1 an dessen Rückseite befestigte Platte 4 und die daran ihrerseits zu befestigende Schiene 5. In der FIG 3 ist diese Konstellation in der Seitenansicht gezeigt. Es ist in der FIG 2 und in der FIG 3 die Situation ohne Verdrahtung dargestellt.

Diese Schiene 5 bietet nun die Möglichkeit, daran Zusatzmodule und Sonderbauteile 15 zu befestigen, die für eine solche Verteilereinheit zwingend erforderlich sind oder diese Einheit bedarfsweise ergänzen. Diese Zusatzeinbauten 15 können somit an einer Stelle innerhalb der Verteilereinheit plaziert werden, die jederzeit zugänglich ist. Solche Zusatzeinbauten stellen beispielsweise, wie anfangs bereits erwähnt, eine Anschlußdose, Amtsleitungsumschaltungen, Sicherungseinrichtungen, zusätzliche Anschlußklemmen und Erdanschlußeinrichtungen dar. In der Normalposition wird die U-förmig ausgebildete Schiene 5 in äußerst einfacher Weise an der oberen Kante der Platte 4 eingehängt. Dies wird durch die hakenförmigen Ausformungen 6 ermöglicht, die im oberen Bereich eines jeden Schenkels in der Nähe der hinteren Kante vorhanden sind. Um dieses Einhängen zu erleichtern, können an der Oberkante der Platte 4 an beiden Außenseiten Einschnitte 17 vorgesehen sein, die zumindest eine schräg verlaufende Kante aufweisen. In der Normalposition befindet sich also die Schiene 5 in einem Bereich des Verteilers oberhalb des Trägerteils 1, der für die ordnungsgemäße Führung der Leiter zumindest seiner Höhe nach sowieso zur Verfügung gestellt werden muß. In dieser Normalposition wird von der eingehängten Schiene 5 dieser obere Verdrahtungsbereich zumindest teilweise überdeckt. Sollen diese überdeckten Bereiche z. B. zur Durchführung von Kabelarbeiten zugänglich gemacht werden, so kann die Schiene 5 in einer erhöhten Stellung geparkt werden. Jeder Schenkel der Schiene 5 weist vorzugsweise in seinem unteren hinteren Bereich einen von der Unterkante ausgehenden Schlitz 7 auf. Dieser Schlitz in der aus Blechmaterial gebogenen Schiene 5 ist etwas breiter als die Dicke der gleichfalls aus Blechmaterial hergestellten Platte 4. Dieser an beiden Schenkeln vorhandene Schlitz 7 dient nun dazu, die Schiene 5 auf die obere Kante der Platte 4 aufzustecken. Damit befindet sich diese Schiene in der durch 5 a angedeuteten erhöhten Position. In dieser Position wird der in der Normalposition überdeckte Bereich der Verteilereinheit freigegeben. Die Leiter, die zu den an der Vorderseite der Schiene befestigten Zusatzmodulen bzw. Sonderbauteilen 15 führen, sind hinsichtlich ihrer Länge so ausgelegt, daß die Schiene jederzeit aus der Normalposition in die Parkposition 5 a versetzt werden kann.

Jeder Schenkel der Schiene 5 weist in unmittelbarer Nähe der vorderen Wand einen von der unteren Kante bzw. von der oberen Kante jeweils ausgehenden Schlitz 18 auf. Diese Schlitze können zur Halterung von dünnem Plattenmaterial herangezogen werden, die unmittelbar an der Hinterseite der Schienenwand verlaufen. Durch diese einzubringende Platte kann verhindert werden, daß die Spitzen von Schrauben, mit denen die Zusatzmodule bzw. Sonderbauteile 15 befestigt werden, in den durch die U-förmige Schiene 5 bestimmten Raum hineinragen. Derartige Schraubenspitzen könnten beispielsweise zur Verletzung von Leiterisolierungen führen.

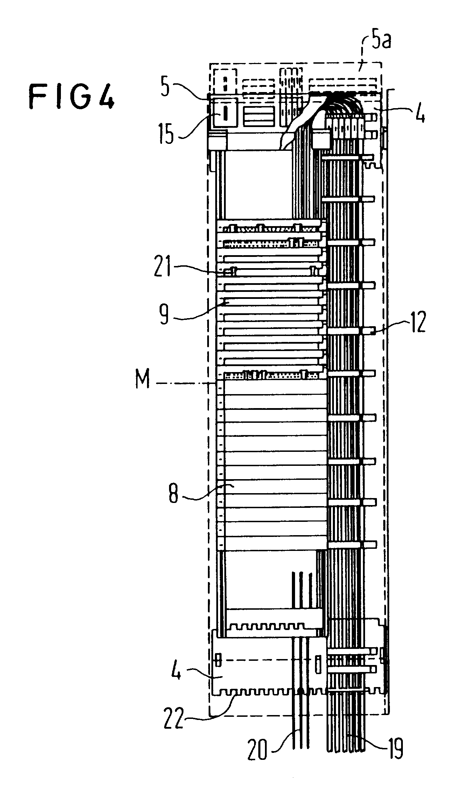

In der in der FIG 4 ohne Abdeckhaube dargestellten Verteilereinheit ist ihre Bestückung mit den Einzelelementen angedeutet. Ausgehend von einer vorgegebenen Markierungslinie M ist oberhalb dieser Linie ein Feld von Anschlußleisten 9 vorhanden, die z. B. als Trennleisten der Internseite zugeordnet sind. Die an diese Leisten anzuschließenden Leiter 19 führen demnach zur Vermittlungseinrichtung. Diese Leitungen werden, wie bereits erwähnt, an der über das Profil des Trägerteils 1 seitlich hinausreichenden Platte 4 z. B. mittels Federschellen befestigt. Diese werden in die hierfür vorgesehenen Ausschnitte 16 eingebracht. Das Einlegen, Kontaktieren und Befestigen auf den Platten 4 ist vom Profil weg vorgesehen, um bei einer späteren Erweiterung ein Durchfädeln zu vermeiden. Von der Befestigungsstelle an der oberen Platte 4 werden die einzelnen Leiter von oben zu den Trennleisten 9 geführt und mit ihren Anschlußelementen verbunden. Diese Anschlußelemente sind in der Regel als Klemmelemente ausgebildet, die den abisolierfreien Anschluß der elektrischen Leiter gestatten. Diese genannten Anschlußelemente können beispielsweise an der Unterseite der Trennleiste vorgesehen sein. Die an ihrer Oberseite vorhandenen Anschlußelemente sind für die im Rahmen der sogenannten Rangierung zu belegenden variablen Anschlüsse vorhanden. Sie sind von vorne gut erreichbar. An die der Internseite zugeordneten Anschlußleisten 9 sind bedarfsweise Schutzstecker 21 aufzustecken.

Es wird nun mit den Leitern des Externkabels 20 nicht unmittelbar rangiert, sondern die Leiter werden an Anschlußelemente der unterhalb der Markierungslinie M angeordneten Rangierleisten 8 angeklemmt. Es wird dann die eigentliche Rangierung zwischen den jeweils an der Vorderseite vorhandenen Anschlußelementen der Trennleisten und den Anschlußelementen der Rangierleisten vorgenommen. Durch die von einer bestimmten Markierung M aus erfolgende Teilung der Leistenfelder wird die z. B. nach und nach entsprechend dem Anwachsen der Teilnehmerzahl vorzunehmende Erweiterung erleichtert, wenn von dieser Markierung weg nach unten bzw. nach oben ausgebaut wird. Die Anschlußleisten sind unabhängig von den Drahtführungen nachträglich einzusetzen.

Die an der unteren Kante der unteren Platte vorgesehenen Ausschnitte 22 dienen dazu, in einfacher Weise Kabelbinder für die zusätzliche Halterung der Kabel anzubringen. In der FIG 4 ist wiederum die an der oberen Platte eingehängte Schiene 5, die mit Bauteilen 15 bestückt ist, angedeutet. Sie ist abgebrochen dargestellt, so daß die normalerweise von ihr überdeckten Leiter sichtbar sind. Die Position 5 a der Schiene entspricht der durch einfaches Aufstecken auf die Kante der Platte 4 erreichbaren Parkposition.

Die Schiene könnte auch an der am unteren Ende des Trägerteils 1 angeordneten Schiene in zwei verschiedenen Positionen gehalten werden. Hierzu müßte sie mit den hakenförmigen Ausformungen 6 in Ausschnitte eingehängt werden, die unterschiedlich hoch angebracht sind.

## Patentansprüche

1. Verteilereinheit zum Anschließen und Verbinden von elektrischen Leitungen in Telekommunikationsanlagen mit einem die hierzu erforderlichen Anschlußleisten aufnehmenden länglichen Trägerteil (1) und mindestens einem damit rückseitig verbindbaren Halteelement (4), das seinerseits zur Herstellung des gebrauchsfertigen Endmontagezustandes, in welchem das Trägerteil längsseitig vertikal ausgerichtet ist, dient **dadurch gekennzeichnet**, daß wenigstens in einem Endbereich der Verteilereinheit Aufnahmeelemente zur unmittelbaren und jederzeit ohne Werkzeugeinsatz lösbaren Befestigung eines in Querrichtung verlaufenden schienenartigen Elementes (5) vorgesehen sind, das zusätzliche Baueinheiten und/oder Sonderbauteile (15) aufnimmt, wobei die Aufnahmeelemente für das schienenartige Element (5) durch eine eine C-Form aufweisende und als Halteelement dienende Platte (4) mitgebildet werden, die Schenkeltiefe der Platte den Abstand zur Montagewand festlegt, und die Platte an dem Trägerteil in dessen oberen und/oder unteren Endbereich derart angebracht und dimensioniert ist, daß sie über das Trägerteil zumindest an ihrem längsseitigen oberen bzw. unteren Ende hinausragt, wobei das schienenartige Element von vorne durch die Anordnung dieser Aufnahmeelemente in eine einen Teilbereich der Verteilereinheit überdeckenden Normalposition und bei gleicher Ausrichtung in eine Parkposition (5 a) für den Fall gebracht werden kann, daß ein Zugriff auf den überdeckten Teilbereich beabsichtigt ist, wobei das schienenartige Element (5) U-förmig ausgebildet ist, und in gleicher Weise jeder Schenkel im Bereich der oberen und rückseitigen Kante angeordnete hakenförmige Ausformungen und im Bereich der unteren Kante wenigstens einen Schlitz aufweist, so daß es an der im oberen Endbereich des Trägerteils (1) angebrachten Platte (4) in die Normalposition und in die Parkposition unmittelbar in die als Aufnahmeelement dienende obere Kante einhängbar bzw. aufsteckbar ist und daß es in der Normalposition ausschließlich innerhalb des über das Trägerteil (1) hinausragenden Bereiches der Platte (4) angeordnet ist.

## Claims

1. Distributor unit for attaching and connecting electrical lines in telecommunication systems, having an oblong carrier part (1) which accommodates the terminal strip required for this purpose and having at least one retaining element (4) which can be connected to said carrier part on the rear side and which for its part serves to produce the final installation condition ready for use, in which the carrier part is vertically aligned with a long side, characterized in that there are provided at least in one end region of the distributor unit accommodating elements for the purpose of fastening directly and in a fashion detachable at any time without the use of tools a rail-like element (5) which extends in the transverse direction and accommodates additional assemblies and/or special components (15), the accommodating elements for the rail-like element (5) being coformed by a plate (4) which has a C-shape and serves as retaining element, the leg depth of the plate fixing the spacing from the installation wall, and the plate being attached to the carrier part in the upper and/or lower end regions thereof and dimensioned such that it projects beyond the carrier part at least at its upper or lower end on the long side, it being possible that because of the arrangement of these accommodating elements the rail-like element can be brought from the front into a normal position covering a subregion of the distributor unit and in the case of the same alignment can be brought into a parking position (5a) for the case in which access to the covered subregion is intended, the rail-like element (5) being constructed in a U-shape and in the same way each leg having hook-shaped formations arranged in the region of the upper and rear-side edge and having at least one slot in the region of the lower edge, with the result that said rail-like element can be suspended or plugged on the plate (4) attached in the upper end region of the carrier part (1) directly into the upper edge, serving as accommodating element, in the normal position and in the parking position, and that in the normal position it is arranged exclusively inside the region of the plate (4) projecting beyond the carrier part (1).

## Revendications

1. Répartiteur servant à raccorder et à relier des conducteurs électriques dans des installations de télécommunication, comportant une pièce de support oblongue (1) qui reçoit les barrettes de connexion nécessaires à cet effet, et au moins un élément de maintien (4) pouvant être reliée au dos de cette pièce de support et qui sert, pour sa part, à établir l'état de montage final prêt pour l'utilisation, dans lequel la direction longitudinale de la pièce de support est orientée verticalement,
caractérisé par le fait
qu'au moins dans une zone d'extrémité du répartiteur sont prévus des éléments de réception servant à fixer directement et à tout moment d'une manière amovible sans utilisation d'un outil, un élément du type rail (5), qui s'étend dans la direction transversale et qui reçoit des modules supplémentaires et/ou des composants particuliers supplémentaires (15), les éléments de réception de l'élément du type rail (5) étant formés d'une plaque (4) ayant la forme d'un C et utilisée en tant qu'élément de maintien, tandis que la profondeur des branches de la plaque fixe la distance par rapport à la paroi de montage et que la plaque est montée sur la pièce de support, dans la zone d'extrémité supérieure et/ou inférieure de cette dernière et est dimensionnée de sorte à dépasser, au moins par son extrémité longitudinale supérieure ou inférieure, de la pièce de support, l'élément du type rail pouvant être amené de front, par la disposition de ces éléments de réception, dans une position normale dans laquelle il recouvre une partie du répartiteur et, avec un même alignement, dans une position de rangement (5 a), dans le cas où l'on souhaite accéder à la partie recouverte, l'élément en forme de rail (5) est en forme de U et, de la même manière, chaque branche a des excroissances en forme de crochets disposées au voisinage du bord supérieur et arrière, et au moins une fente au bord inférieur de sorte que l'élément (5) puisse être accroché et enfiché sur la plaque (4) disposée dans la zone d'extrémité supérieure de la partie de maintien (1), dans la position normale et dans la position de rangement, directement sur le bord supérieur utilisé comme élément de réception, et, dans la position normale, l'élément (5) est disposé exclusivement à l'intérieur de la zone de la plaque (4), qui dépasse de la pièce de support (1).
